# EUROPEAN PATENT APPLICATION

(11) **EP 4 568 127 A1**
(43) Date of publication of application: **11.06.2025**
(21) Application number: 22954018.2
(22) Date of filing: 04.08.2022
(51) Int. Cl.: H04B 7/0413, H04B 7/0456

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/029925
(87) International publication number: WO 2024/029029

(57) **Abstract**

A terminal according to an aspect of the present disclosure includes a receiving section that receives configuration information related to a sounding reference signal (SRS) resource, and a control section that controls UL transmissions transmitted from a plurality of respective panels by using a space division multiplexing scheme, based on a combination of SRS resource indicators (SRIs) indicated by a field included in downlink control information, wherein an association between a maximum rank supported for the UL transmissions and numbers of SRS resources configurable for the respective panels is configured or defined.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, Rel-18 (or later versions) NR), a UE can use one of multi-TRP (or multibeam) for uplink (UL) transmission. It is studied that for improvement of UL throughput/reliability, simultaneous UL transmission (for example, simultaneous multi-panel UL transmission (STxMP)) using a plurality of panels is supported for one or more transmission/reception points (TRPs).

In a case where the simultaneous multi-panel UL transmission is supported, the UE transmits ULs simultaneously from two panels, but sufficient progress has not been made on a study of how to control the UL transmission.

In view of this, the present disclosure has one object to provide a terminal, a radio communication method, and a base station that can appropriately perform transmission control even when simultaneous transmission using multi-TRP is supported. Solution to Problem

A terminal according to an aspect of the present disclosure includes a receiving section that receives configuration information related to a sounding reference signal (SRS) resource, and a control section that controls UL transmissions transmitted from a plurality of respective panels by using a space division multiplexing scheme, based on a combination of SRS resource indicators (SRIs) indicated by a field included in downlink control information, wherein an association between a maximum rank supported for the UL transmissions and numbers of SRS resources configurable for the respective panels is configured or defined. Advantageous Effects of Invention

According to an aspect of the present disclosure, even when simultaneous transmission using multi-TRP is supported, transmission control can be appropriately performed.

### Brief Description of Drawings

[FIG. 1] FIGS. 1A and 1B are diagrams to show examples of single-panel UL transmission.
[FIG. 2] FIGS. 2A to 2C are diagrams to show examples of schemes 1 to 3 for simultaneous UL transmission using multi-panel.
[FIG. 3] FIGS. 3A to 3C are diagrams to show examples of a PUSCH transmission scheme.
[FIG. 4] FIGS. 4A to 4C are diagrams to show other examples of the PUSCH transmission scheme.
[FIG. 5] FIG. 5 is a diagram to show an example of an association (for example, a table) between a maximum rank and the numbers of SRS resources in respective panels, according to a first embodiment.
[FIG. 6] FIG. 6 is a diagram to show another example of the association (for example, a table) between a maximum rank and the numbers of SRS resources in respective panels, according to the first embodiment.
[FIG. 7] FIG. 7 is a diagram to show another example of the association (for example, a table) between a maximum rank and the numbers of SRS resources in respective panels, according to the first embodiment.
[FIG. 8] FIG. 8 is a diagram to show an example of an association (for example, a table) between codepoints of a DCI field (for example, an SRI field) and SRIs corresponding to the respective codepoints, according to a second embodiment.
[FIG. 9] FIG. 9 is a diagram to show another example of the association (for example, a table) between codepoints of a DCI field (for example, an SRI field) and SRIs corresponding to the respective codepoints, according to the second embodiment.
[FIG. 10] FIG. 10 is a diagram to show another example of the association (for example, a table) between codepoints of a DCI field (for example, an SRI field) and SRIs corresponding to the respective codepoints, according to the second embodiment.
[FIG. 11] FIG. 11 is a diagram to show an example of a schematic structure of a radio communication system according to one embodiment.
[FIG. 12] FIG. 12 is a diagram to show an example of a structure of a base station according to one embodiment.
[FIG. 13] FIG. 13 is a diagram to show an example of a structure of a user terminal according to one embodiment.
[FIG. 14] FIG. 14 is a diagram to show an example of a hardware structure of the base station and the user terminal according to one embodiment.
[FIG. 15] FIG. 15 is a diagram to show an example of a vehicle according to one embodiment.

### Description of Embodiments

### (Control of SRS and PUSCH Transmission)

In Rel-15 NR, a terminal (user terminal, User Equipment (UE)) may receive information used to transmit a reference signal for measurement (for example, a sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be associated with a certain number of SRS resources (may group the certain number of SRS resources together). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information on SRS usage.

Here, the SRS resource type may indicate one of a periodic SRS (P-SRS), a semi-persistent SRS (SP-SRS), and aperiodic CSI (Aperiodic SRS (A-SRS)). Note that the UE may periodically (or, after activation, periodically) transmit the P-SRS and the SP-SRS and may transmit the A-SRS, based on an SRS request of DCI.

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS for codebook or non-codebook usage may be used to determine a precoder for codebook based or non-codebook based uplink shared channel (Physical Uplink Shared Channel (PUSCH)) transmission based on an SRI.

For example, in a case of codebook based transmission, the UE may determine a precoder (precoding matrix) for the PUSCH transmission, based on an SRI, a transmitted rank indicator (TRI), and a transmitted precoding matrix indicator (TPMI). In a case of non-codebook based transmission, the UE may determine a precoder for the PUSCH transmission, based on an SRI.

The SRS resource information may include an SRS resource ID (SRS-ResourceId), the number of SRS ports, an SRS port number, a transmission Comb, SRS resource mapping (for example, a time and/or frequency resource location, resource offset, a resource periodicity, the number of repetitions, the number of SRS symbols, an SRS bandwidth, or the like), hopping-related information, an SRS resource type, a sequence ID, SRS spatial relation information, and the like.

The SRS spatial relation information (for example, an RRC information element "spatialRelationInfo") may indicate information on a spatial relation between a certain reference signal and an SRS. The certain reference signal may be at least one of a synchronization signal / broadcast channel (Synchronization Signal / Physical Broadcast Channel (SS/PBCH)) block, a channel state information reference signal (CSI-RS), and an SRS (for example, another SRS). The SS/PBCH block may be referred to as a synchronization signal block (SSB).

The SRS spatial relation information may include, as an index of the above-described certain reference signal, at least one of an SSB index, a CSI-RS resource ID, and an SRS resource ID.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The SRS spatial relation information may include a serving cell index, a BWP index (BWP ID), and the like corresponding to the above-described certain reference signal.

Regarding a certain SRS resource, when spatial relation information related to an SSB or CSI-RS and an SRS is configured, the UE may transmit the SRS resource by using the same spatial domain filter (spatial domain transmission filter) as a spatial domain filter (spatial domain reception filter) for reception of the SSB or CSI-RS. In this case, the UE may assume that a UE receive beam of the SSB or CSI-RS and a UE transmit beam of the SRS are the same.

Regarding a certain SRS (target SRS) resource, when spatial relation information related to another SRS (reference SRS) and the SRS (target SRS) is configured, the UE may transmit the target SRS resource by using the same spatial domain filter (spatial domain transmission filter) as a spatial domain filter (spatial domain transmission filter) for transmission of the reference SRS. In other words, in this case, the UE may assume that a UE transmit beam of the reference SRS and a UE transmit beam of the target SRS are the same.

The UE may determine, based on a value of a certain field (for example, an SRS resource indicator (SRI) field) in DCI (for example, DCI format 0_1), a spatial relation for a PUSCH scheduled by the DCI. Specifically, the UE may use, for PUSCH transmission, spatial relation information (for example, an RRC information element "spatialRelationInfo") of an SRS resource determined based on the value of the certain field (for example, the SRI).

In Rel-15/16 NR, when codebook based transmission is used for the PUSCH, the UE may be configured with an SRS resource set for codebook usage including up to two SRS resources by RRC, and one of the up to two SRS resources may be indicated for the UE by DCI (1-bit SRI field). A transmission beam for the PUSCH is indicated by the SRI field.

The UE may determine a TPMI and the number of layers (transmission rank) for the PUSCH, based on a precoding information and number of layers field (also referred to hereinafter as a precoding information field). The UE may select, based on the TPMI, the number of layers, and the like described above, a precoder from an uplink codebook for the same number of ports as the number of SRS ports indicated by a higher layer parameter "nrofSRS-Ports" configured for an SRS resource indicated by the above-described SRI field.

In Rel-15/16 NR, when non-codebook based transmission is used for the PUSCH, the UE may be configured with an SRS resource set for non-codebook usage including up to four SRS resources by RRC, and one or more of the up to four SRS resources may be indicated for the UE by DCI (2-bit SRI field).

The UE may determine the number of layers (transmission rank) for the PUSCH, based on the SRI field. For example, the UE may determine that the number of SRS resources indicated by the SRI field is the same as the number of layers for the PUSCH. The UE may compute a precoder for the SRS resource.

When a CSI-RS associated with the SRS resource (or SRS resource set to which the SRS resource belongs) (which may be referred to as an associated CSI-RS) is configured by a higher layer, a transmit beam for the PUSCH may be computed based on (measurement of) the configured associated CSI-RS. Otherwise, a transmit beam for the PUSCH may be indicated by an SRI.

Note that the UE may be configured with whether to use codebook based PUSCH transmission or non-codebook based PUSCH transmission by a higher layer parameter "txConfig" indicating a transmission scheme. The parameter may indicate a value of "codebook" or "non-codebook (nonCodebook)."

In the present disclosure, a codebook based PUSCH (codebook based PUSCH transmission, codebook based transmission) may mean a PUSCH in a case where the UE is configured with "codebook" as a transmission scheme. In the present disclosure, a non-codebook based PUSCH (non-codebook based PUSCH transmission, non-codebook based transmission) may mean a PUSCH in a case where the UE is configured with "non-codebook" as a transmission scheme.

Incidentally, in future radio communication systems (for example, Rel-18 (or later versions) NR), it is assumed that simultaneous UL transmission (for example, simultaneous multi-panel UL transmission (STxMP)) using a plurality of beams/panels/TRPs is supported for one or more transmission/reception points (TRPs).

For example, for Rel. 18, simultaneous UL transmission using up to two TRPs / two panel is under study. Considering single-DCI based and multi-DCI based multi-TRP operations, it is also assumed that a total number of layers and a total number of codewords are set to up to 4 layers and up to 2 over all the panels, respectively. Of course, the number of TRPs, the number of panels, the number of layers, and the number of codewords are not limited to these.

### (Single-panel Transmission)

At least one of Transmission Schemes A and B below (single-panel UL transmission schemes A and B) may be applied to a single-panel UL transmission scheme or candidates for the single-panel UL transmission scheme. Note that, in the present disclosure, a panel / UE panel may be interpreted as a UE capability value set reported for each UE capability. In the present disclosure, different panels, different spatial relations, different joint TCI states, different TPC parameters, different antenna ports, and the like may be interchangeably interpreted.

### {Transmission Scheme A: Single-panel Single-TRP UL Transmission}

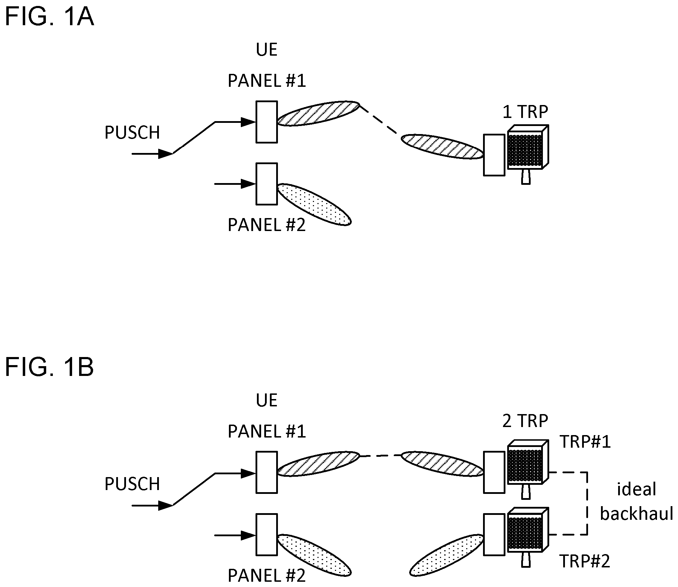

In Rel. 15 and Rel. 16, the UE uses a transmission scheme in which UL is transmitted to one TRP from only one beam and panel at one timing (FIG. 1A).

### {Transmission Scheme B: Single-panel Multi-TRP UL Transmission}

In Rel. 17, it is studied that UL transmission from only one beam and panel is performed at one timing and repetition transmission to a plurality of TRPs is performed (FIG. 1B). In an example in FIG. 1B, the UE transmits a PUSCH to TRP #2 from panel #2 after transmitting a PUSCH to TRP #1 from panel #1 (switching the beam and panel). The two TRPs are connected to each other via an ideal backhaul.

### (Multi-panel Transmission)

For Rel. 18 (or later versions), it is studied that for improvement of UL throughput/reliability, simultaneous UL transmission (for example, simultaneous multi-panel UL transmission (STxMP)) using a plurality of panels is supported for one or more TRPs. A multi-panel UL transmission scheme for a certain UL channel (for example, PUSCH/PUCCH) and the like is also under study.

As multi-panel UL transmission, up to X panels (for example, X = 2) and up to Y panels (for example, Y = 2) may be supported, for example. When UL precoding indication for a PUSCH is supported in the multi-panel UL transmission, a codebook for existing systems (for example, Rel. 16 (or earlier versions)) may be supported for multi-panel simultaneous transmission. When single-DCI and multi-DCI based multi-TRP operations are considered, the number of layers and the number of codewords (CWs) may be up to x (for example, x = 4) and up to y (for example, y = 2) in all the panels, respectively.

For a multi-panel UL transmission scheme or candidates for the multi-panel UL transmission scheme, at least one of schemes 1 to 3 below (multi-panel UL transmission schemes 1 to 3) is under study. Only one of Transmission Schemes 1 to 3 may be supported. A plurality of schemes including at least one of Transmission Schemes 1 to 3 may be supported, and one of the plurality of transmission schemes may be configured for the UE.

### <Transmission Scheme 1: Coherent Multi-panel UL Transmission>

A plurality of panels may be synchronized with each other. All the layers are mapped to all the panels. A plurality of analog beams are indicated. An SRS resource indicator (SRI) field may be enhanced. This scheme may use up to four layers for UL.

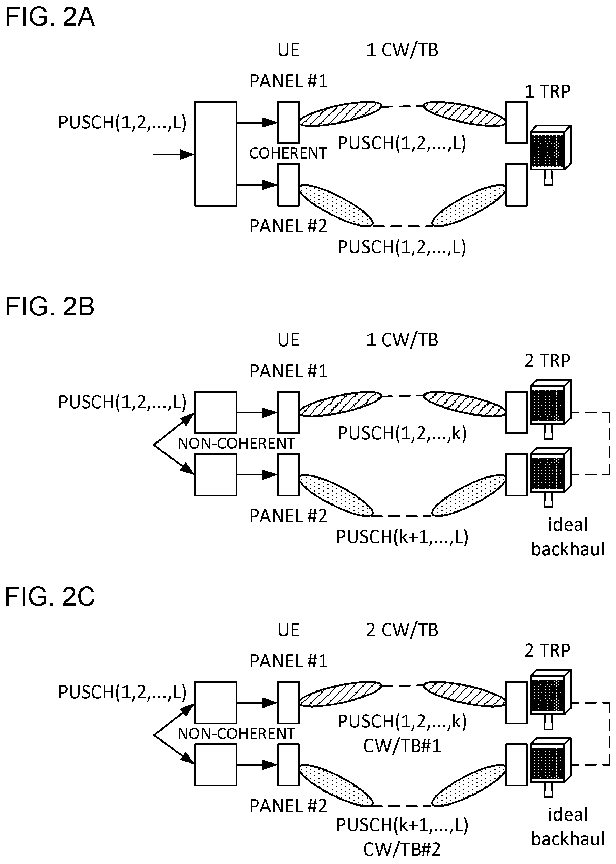

In an example in FIG. 2A, the UE maps one codeword (CW) or one transport block (TB) to L layers (PUSCH (1, 2, ..., L)) to transmit L layers from each of the two panels. Panel #1 and panel #2 are coherent with each other. Transmission scheme 1 can obtain a gain by diversity. A total number of layers in the two panels is 2L. When a maximum value of the total number of layers is 4, a maximum value of the number of layers in one panel is 2.

### <Transmission Scheme 2: Non-coherent Multi-panel UL Transmission with One Codeword (CW) or Transport Block (TB)>

A plurality of panels may not be synchronized with each other. Different layers are mapped to different panels and one CW or TB for PUSCHs from the plurality of panels. Layers corresponding to one CW or TB may be mapped to the plurality of panels. This transmission scheme may use up to four layers or up to eight layers for UL. When up to eight layers are supported, this transmission scheme may support one CW or TB using up to eight layers.

In an example in FIG. 2B, the UE maps 1 CW or 1 TB to k layers (PUSCH (1, 2, ..., k)) and L-k layers (PUSCH (k+1, k+2, ..., L)) to transmit k layers and L-k layers from panel #1 and panel #2, respectively. Transmission scheme 2 can obtain a gain by multiplexing and diversity. A total number of layers in the two panels is L.

### <Transmission Scheme 3: Non-coherent Multi-panel UL Transmission with Two CWs or TBs>

A plurality of panels may not be synchronized with each other. Different layers are mapped to different panels and two CWs or TBs for PUSCHs from the plurality of panels. Layers corresponding to one CW or TB may be mapped to one panel. Layers corresponding to a plurality of CWs or TBs may be mapped to different panels. This transmission scheme may use up to four layers or up to eight layers for UL. When up to eight layers are supported, this transmission scheme may support up to four layers per CW or TB.

In an example in FIG. 2C, the UE maps CW #1 or TB #1 and CW #2 or TB #2 of the 2 CWs or 2 TBs to k layers (PUSCH (1, 2, ..., k)) and L-k layers (PUSCH (k+1, k+2, ..., L)), respectively, to transmit k layers and L-k layers from panel #1 and panel #2, respectively. Transmission scheme 3 can obtain a gain by multiplexing and diversity. A total number of layers in the two panels is L.

In each of the above-described transmission schemes, the base station may configure or indicate panel-specific transmission for UL transmission by using UL TCI or a panel ID. The UL TCI (UL TCI state) may be based on signaling similar to DL beam indication supported in Rel. 15. The panel ID may be implicitly or explicitly applied to transmission of at least one of a target RS resource or target RS resource set, a PUCCH, an SRS, and a PRACH. When the panel ID is explicitly notified, the panel ID may be configured in at least one of a target RS, a target channel, and a reference RS (for example, DL RS resource configuration or spatial relationship information).

### (Simultaneous Multi-panel Transmission)

For the above-described one or more transmission schemes/modes, multi-panel UL transmission (for example, simultaneous multi-panel transmission (Simultaneous Transmission across Multiple Panels) (STxMP)) for scheduling of a PUSCH based on one of DCI (single DCI) / scheduling of a PUSCH based on a plurality of DCI (multi-DCI) is under study.

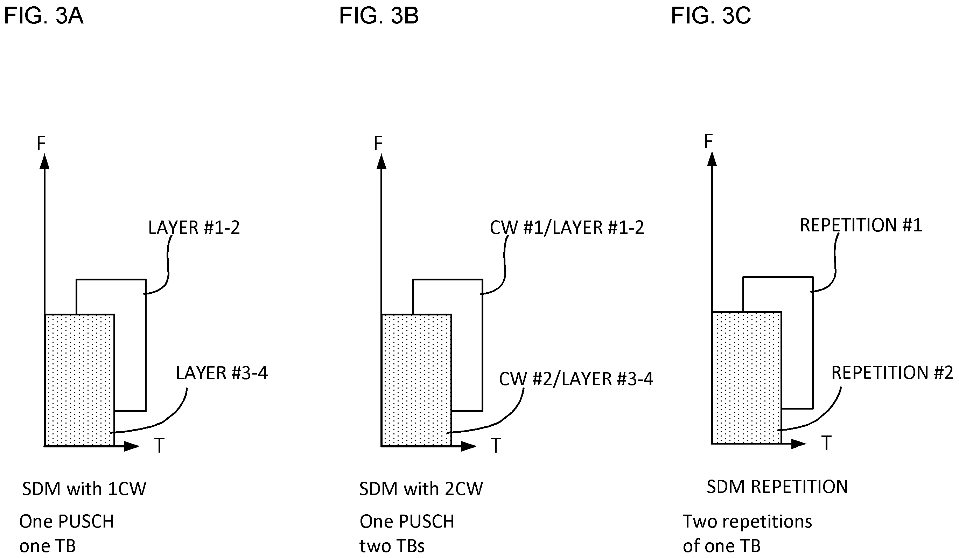

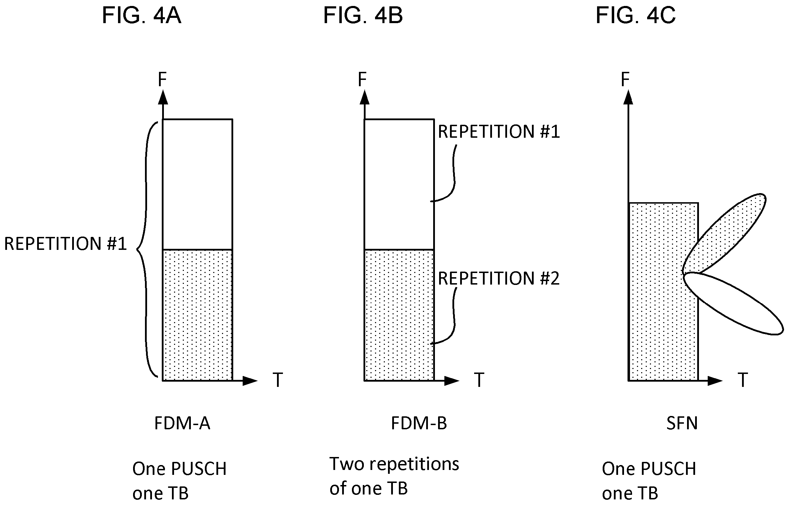

In simultaneous multi-panel transmission (STxMP) in a single-DCI based multi-TRP system, the following schemes may be applied to UL transmission (for example, the PUSCH).
- Space division multiplexing (SDM) scheme: different layers / DMRS ports for one PUSCH are separately precoded and simultaneously transmitted from different UE beams/panels (see FIGS. 3A and 3B).
- Space division multiplexing repetition (SDM repetition) scheme: two PUSCH transmission occasions with different redundancy versions (RVs) of the same TB are simultaneously transmitted from two different UE beams/panels on the same time and frequency resources (see FIG. 3C).
- Frequency division multiplexing (FDM)-A scheme: different parts of a frequency domain resource for one PUSCH transmission occasion are transmitted from different UE beams/panels (see FIG. 4A).
- FDM-B scheme: two PUSCH transmission occasions with same/different RVs of the same TB are transmitted from different UE beams/panels on non-overlapping frequency domain resources and the same time domain resource (see FIG. 4B).
- SFN based transmission scheme: all the same layers / DMRS ports for one PUSCH are simultaneously transmitted from two different UE beams/panels (see FIG. 4C).

Note that, in the present disclosure, repetition transmission and transmission may be interchangeably interpreted. Transmission of a plurality of TBs may mean transmission of a plurality of the same TBs or transmission of different TBs.

### {Space Division Multiplexing (SDM)}

The UE may assume that PUSCH repetition transmissions to which space division multiplexing (SDM) is applied are scheduled in the same time resource and the same frequency resource. In other words, when a plurality of coherent panels are used, the UE may transmit PUSCH repetition transmissions to which SDM is applied, in the same time resource and the same frequency resource.

FIG. 3A is a diagram to show an example of the repetition transmissions to which SDM is applied with one CW. In FIG. 3A, respective time resources and frequency resources for layers #1-2 and layers #3-4 corresponding to a PUSCH/PUCCH are the same.

FIG. 3B is a diagram to show an example of the repetition transmissions to which SDM is applied with two CWs. In FIG. 3B, respective time resources and frequency resources for CW #1 and CW #2 corresponding to a PUSCH/PUCCH are the same.

FIG. 3C is a diagram to show an example of the repetition transmissions to which SDM is applied. In FIG. 3C, respective time resources and frequency resources for repetitions #1 and #2 of a PUSCH/PUCCH are the same.

Note that, in the PUSCH transmissions to which SDM is applied (for example, the PUSCH repetition transmissions), at least parts of respective time and frequency resources may overlap each other.

### {Frequency Division Multiplexing (FDM)}

The UE may assume that PUSCH/PUCCH repetition transmissions to which frequency division multiplexing (FDM) is applied are scheduled in the same time resource and different frequency resource. In other words, when a plurality of coherent panels are used, the UE may transmit PUSCH/PUCCH repetition transmissions to which FDM is applied, in the same time resource and different frequency resources.

FIG. 4A is a diagram to show a first example of the repetition transmissions to which FDM (FDM-A) is applied. FIG. 4A shows an example in which one PUSCH/PUCCH repetition transmission is performed per TB/UCI.

FIG. 4B is a diagram to show a second example of the repetition transmissions to which FDM (FDM-B) is applied. FIG. 4B shows an example in which two PUSCH/PUCCH repetition transmissions are performed per TB/UCI.

FIG. 4C is a diagram to show an example of repetition transmissions to which a single frequency network (SFN) is applied. FIG. 4C shows an example in which one PUSCH/PUCCH is transmitted per TB/UCI by using different beams/panels.

As shown in FIGS. 3A and 3B, when simultaneous multi-panel transmission based on the space division multiplexing scheme (STxMP SDM scheme) is performed for non-codebook PUSCH transmission, different layers / DMRS ports for one PUSCH can be separately precoded and simultaneously transmitted from different UP panels.

For the simultaneous multi-panel transmission based on the space division multiplexing scheme for a non-codebook based PUSCH, the following two options are assumed as SRI indication, for example.

### <Option 1>

One SRI combination is indicated. The SRI combination may be indicated from non-codebook SRS resources across two panels (for example, NCB SRS resources across two panels).

### <Option 2>

A plurality of (for example, two) SRS combinations (for example, two SRI combinations) are indicated. Each SRI combination may be indicated from non-codebook SRS resources of one panel (for example, NCB SRS resources of one panel).

The SRI combination may include one or a plurality of SRS resources (for example, SRS resources for non-codebook). For example, one SRI combination (or SRI field) may indicate SRIs / SRS resources corresponding to respective panels. The SRI combination may be interpreted as an SRI set or an SRI group.

As a mode of UL transmission for Rel. 18 (or later versions), it is also assumed that one or both restrictions of the number of layers across two panels being limited to up to X layers and a new codebook being not introduced are applied. X may be, for example, 4. Of course, the value of X is not limited to 4, and may be another value.

In this case, how to apply/configure the SRI field is an issue.

An example of the issue includes, in Option 1, an issue related to whether an SRI field of an existing system (for example, Rel. 15/16/17) is reused or whether the SRI field is enhanced based on the SRI field of the existing system. In a case where the SRI field is enhanced, how to enhance the SRI field is an issue. Alternatively, another example of the issue includes, in Option 2, an issue related to how to indicate the plurality of (for example, two) SRI combinations.

The inventors of the present invention studied UL transmission control (for example, an SRI indication method / SRS resource configuration and the like) in a case where simultaneous transmission using multi-panel is supported, and came up with the idea of the present embodiment.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of spatial relation information", and the like. The TCI state and the TCI may be interchangeably interpreted.

### (Radio Communication Method)

The UE controls PUSCH (for example, NCB PUSCH) transmissions to be simultaneously transmitted from a plurality of panels by using a space division multiplexing scheme, based on an SRI indicated by DCI. A specific SRS resource indicated by the SRI may be selected from one or more SRS resource candidates configured beforehand by a higher layer parameter.

The UE may receive configuration information related to the SRS resource. The configuration information related to the SRS resource may be configured in common or separately for a plurality of (for example, two) panels. The configuration information related to the SRS resource may be an SRS resource set or a list of SRI resources.

When simultaneous multi-panel transmission (for example, STxMP SDM scheme) using a space division multiplexing scheme is indicated/configured, one SRI combination may indicate an SRI / SRS resource corresponding to the respective panels. A specific SRI (or SRS resource) indicated by the one SRI combination may be selected from one or more SRS resource candidates configured in common for the plurality of panels. In other words, for the plurality of panels, SRS resource candidates / SRS resource sets may be configured in common (or SRS resource candidates may be configured irrespective of a panel index).

When simultaneous multi-panel transmission (for example, STxMP SDM scheme) using a space division multiplexing scheme is indicated/configured, a plurality of (for example, two) SRI combinations may indicate SRIs / SRS resources corresponding to the respective panels. A specific SRI (or SRS resource) indicated by each SRI combination may be selected from one or more SRS resource candidates configured for one panel. In other words, for the plurality of panels, SRS resource candidates / SRS resource sets may be separately configured.

In the following description, a case where two beams/panels/TRPs are used (for example, simultaneous UL transmission using two panels) will be described as an example, but the number of applicable beams/panels/TRPs is not limited to this. The present embodiment may also be applied to a case where three or more beams/panels/TRPs are applied.

In the following description, a panel may be interpreted as a beam / SRI / TCI / UE capability value set / SRS resource / SRS resource set / TRP. A first/second panel may indicate a first/second beam / SRI / SRI field / TCI / TCI field / UE capability value set / SRS resource / SRS resource set / TRP. Alternatively, the first/second panel may indicate a UE capability value set with a lower/higher index, an SRS resource with a lower/higher ID, an SRS resource set with a higher/lower ID, or a TRP with a lower/higher ID. Alternatively, the first/second panels may be an SRS resource / SRS resource set with fewer/more ports.

In the following description, non-codebook based UL transmission (for example, PUSCH transmission based on an SRI / SRS resource for non-codebook) will be described as an example, but the present embodiment is not limited to this. Some or all of the aspects described below may be applied to codebook based UL transmission (for example, PUSCH transmission based on an SRI / SRS resource for codebook).

The following description assumes a case where UL transmissions corresponding to respective panels (for example, PUSCHs to be simultaneously transmitted from the respective panels by using a space division multiplexing scheme) are scheduled by one DCI, but is not restrictive.

In the following description, application of transmission using a space division multiplexing scheme (SDM scheme) may be indicated by a higher layer parameter / DCI.

For example, the higher layer parameter may configure a transmission scheme (for example, SDM scheme / another scheme) for the UE. Alternatively, the DCI may indicate the transmission scheme for the UE. Alternatively, the DCI may indicate two beams (SRIs / TCI states) / panels for the UE. Alternatively, the DCI may indicate two SRI fields / TCI fields. Alternatively, two CB/NCB SRS resource sets may be configured. Alternatively, the DCI may indicate DMR ports in two or a plurality of CDM groups.

### <First Embodiment>

A first embodiment describes the number of SRS resources configurable for respective panels in a case where simultaneous multi-panel transmission (for example, STxMP SDM scheme) using a space division multiplexing scheme is supported.

The first embodiment describes a case where one SRI combination is indicated/configured/applied. The SRI combination may indicate a certain SRS resource from among SRS resources across a plurality of (for example, two) panels. The SRS resource may be a non-codebook SRS resource (for example, an NCB SRS resource).

For example, one SRI field included in DCI may indicate an SRI combination (for example, two or more SRIs / SRS resources or SRIs / SRS resources corresponding to the respective panels). In this case, a plurality of SRS resource candidates indicated by the SRI field may be configured in common for the plurality of panels, or may be configured irrespective of a panel.

When the simultaneous multi-panel transmission based on the space division multiplexing scheme is indicated/configured/supported, a certain combination of / association between a maximum rank and the number of SRS resources of the two panels may be defined/configured. Based on the certain combination/association, SRS resources (or the number of SRS resources) to be configured for each panel may be determined for each maximum rank. The maximum rank (maxRank) may be a maximum number of ranks (or a maximum number of layers) capable of being supported in a case where the plurality of panels (or STxMP SDM scheme) are used.

The UE may expect/assume that SRS resources corresponding to the respective panels are indicated based on a combination of / association between a maximum rank and the numbers of SRS resources corresponding to the two respective panels.

As the combination of / association between the maximum rank and the numbers of SRS resources corresponding to the two respective panels, at least one of Options 1-1 to Option 1-3 below may be applied.

### {Option 1-1}

A total number of SRS resources of the two panels is assumed to be up to X. The total number of SRS resources of the two panels is assumed to be the maximum rank or greater (or equal to the maximum rank, or greater than the maximum rank). X may be, for example, 4. Of course, the value of X is not limited to 4.

The configuration of the maximum rank and the numbers of SRS resources may be defined/configured depending on a UE capability. For example, a maximum total number of SRS resources of the two panels may be determined based on a maximum number of layers reported as UE capability information. The maximum rank may correspond to the sum of ranks of the two panels.

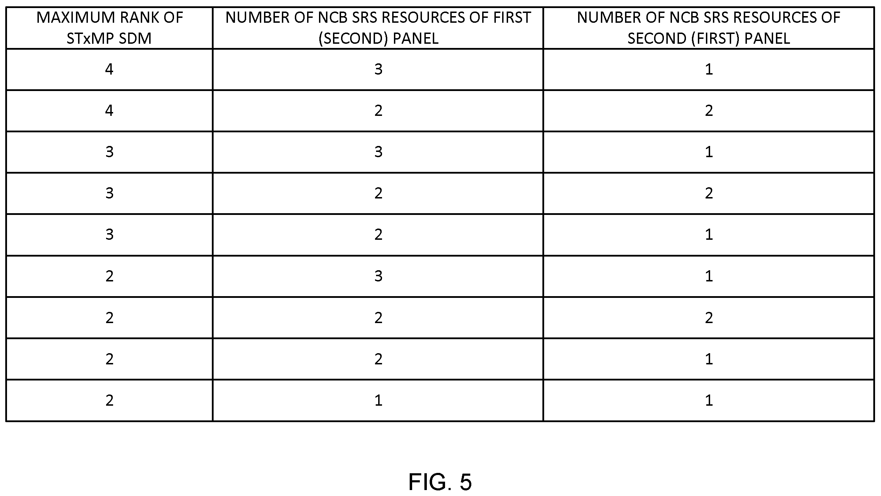

FIG. 5 shows an example of the combination of / association between the maximum rank and the numbers of SRS resources corresponding to the respective panels.

The numbers of SRS resources corresponding to the respective panels may be the numbers of SRS resources configurable for (or associable with) the respective panels. A base station may configure/activate, for the UE, information related to SRS resources corresponding to each panel by using an RRC parameter / MAC CE.

The number of SRS resources corresponding to each panel in FIG. 5 may mean the number of SRS resources configured by the RRC parameter, and may be different from the number of SRS resources indicated by the SRI field of the DCI and used for PUSCH transmission. As an example, when rank = 3 and a total number of SRS resources corresponding to the respective panels is 4 (for example, when the number of SRS resources of a first panel is 3 and the number of SRS resources of a second panel is 1), the SRI field may indicate three of the four SRS resources.

In FIG. 5, the numbers of SRS resources of the respective panels (or the numbers of SRS resources configurable for the respective panels) are defined for each maximum rank. In FIG. 5, candidates (or entries) with a total number of SRS resources of the respective panels being the maximum rank or greater are defined. The combination of / association between the maximum rank and the numbers of SRS resources of the respective panels (which may be referred to as a table) shown in FIG. 5 may be defined in a specification or may be configured for the UE by higher layer signaling.

A plurality of candidates for the numbers of SRS resources of the respective panels may be defined for the same value of the maximum rank. FIG. 5 shows a case where two candidates, three candidates, and four candidates are defined for maximum rank 4, maximum rank 3, and maximum rank 2, respectively. Of course, the number of candidates defined for each maximum rank is not limited to this.

FIG. 5 shows a case where the number of SRS resources configurable for the first panel is greater than or equal to the number of SRS resources configurable for the second panel, but is not limited to this. Switching between the number of SRS resources of the first panel and the number of SRS resources of the second panel may be performed.

FIG. 5 shows a case where the number of SRS resources corresponding to (or configurable for) the first panel and the number of SRS resources corresponding to the second panel being different from each other are supported, but is not limited to this. The number of SRS resources corresponding to the first panel and the number of SRS resources corresponding to the second panel may be the same. In this case, only a certain value (for example, {2, 4}) may be supported as the maximum rank.

### {Option 1-2}

The number of SRS resources of each panel is assumed to be up to Y. The total number of SRS resources of the two panels is assumed to be the maximum rank or greater (or equal to the maximum rank, or greater than the maximum rank). Y may be, for example, 2. Of course, the value of Y is not limited to 2.

The configuration of the maximum rank and the numbers of SRS resources may be defined/configured depending on a UE capability. For example, a maximum total number of SRS resources of the two panels may be determined based on a maximum number of layers reported as UE capability information. The maximum rank may correspond to the sum of ranks of the two panels.

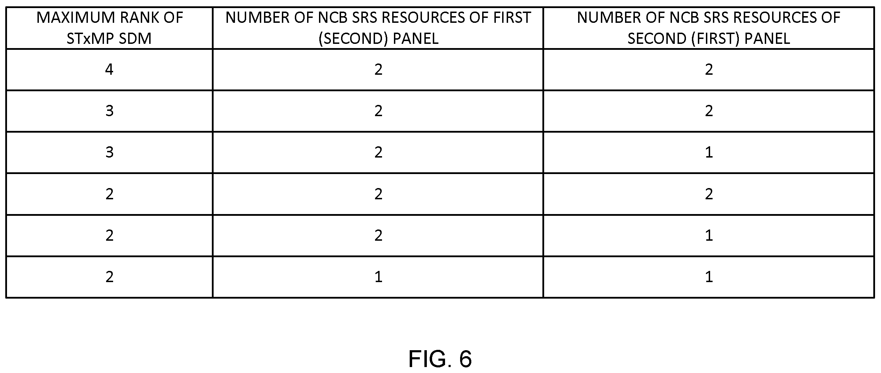

FIG. 6 shows an example of the combination of / association between the maximum rank and the numbers of SRS resources corresponding to the respective panels.

The numbers of SRS resources corresponding to the respective panels may be the numbers of SRS resources configurable for (or associable with) the respective panels. A base station may configure/activate, for the UE, information related to SRS resources corresponding to each panel by using an RRC parameter / MAC CE.

The number of SRS resources corresponding to each panel in FIG. 6 may mean the number of SRS resources configured by the RRC parameter, and may be different from the number of SRS resources indicated by the SRI field of the DCI and used for PUSCH transmission. As an example, when rank = 3 and a total number of SRS resources corresponding to the respective panels is 4 (for example, when the number of SRS resources of a first panel is 2 and the number of SRS resources of a second panel is 2), the SRI field may indicate three of the four SRS resources.

In FIG. 6, the numbers of SRS resources of the respective panels (or the numbers of SRS resources configurable for the respective panels) are defined for each maximum rank. In FIG. 6, candidates (or entries) with a total number of SRS resources of the respective panels being the maximum rank or greater are defined. The combination of / association between the maximum rank and the numbers of SRS resources of the respective panels (which may be referred to as a table) shown in FIG. 6 may be defined in a specification or may be configured for the UE by higher layer signaling.

A plurality of candidates for the numbers of SRS resources of the respective panels may be defined for the same value of the maximum rank. FIG. 6 shows a case where one candidate, two candidates, and three candidates are defined for maximum rank 4, maximum rank 3, and maximum rank 2, respectively. Of course, the number of candidates defined for each maximum rank is not limited to this.

FIG. 6 shows a case where the number of SRS resources configurable for the first panel is greater than or equal to the number of SRS resources configurable for the second panel, but is not limited to this. Switching between the number of SRS resources of the first panel and the number of SRS resources of the second panel may be performed.

FIG. 6 shows a case where the number of SRS resources corresponding to (or configurable for) the first panel and the number of SRS resources corresponding to the second panel being different from each other are supported, but is not limited to this. The number of SRS resources corresponding to the first panel and the number of SRS resources corresponding to the second panel may be the same. In this case, only a certain value (for example, {2, 4}) may be supported as the maximum rank.

### {Option 1-3}

The number of SRS resources of each panel is assumed to be up to Z. The total number of SRS resources of the two panels is assumed to be the maximum rank or greater (or equal to the maximum rank, or greater than the maximum rank). Z may be, for example, 4. Of course, the value of Z is not limited to 4.

The configuration of the maximum rank and the numbers of SRS resources may be defined/configured depending on a UE capability. For example, a maximum total number of SRS resources of the two panels may be determined based on a maximum number of layers reported as UE capability information. The maximum rank may correspond to the sum of ranks of the two panels.

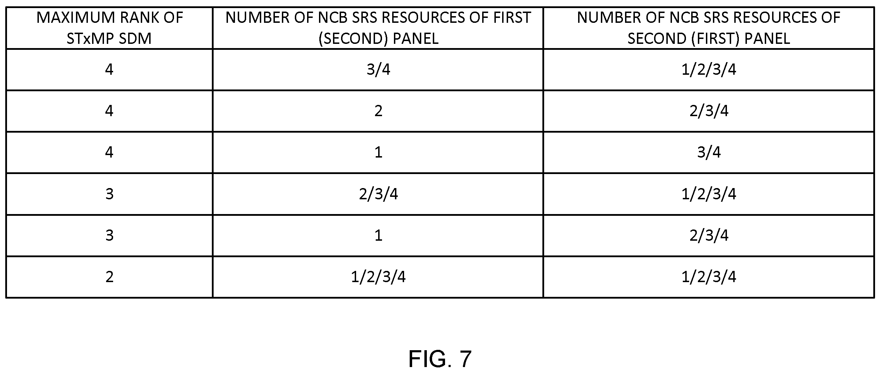

FIG. 7 shows an example of the combination of / association between the maximum rank and the numbers of SRS resources corresponding to the respective panels.

The numbers of SRS resources corresponding to the respective panels may be the numbers of SRS resources configurable for (or associable with) the respective panels. A base station may configure/activate, for the UE, information related to SRS resources corresponding to each panel by using an RRC parameter / MAC CE.

The number of SRS resources corresponding to each panel in FIG. 7 may mean the number of SRS resources configured by the RRC parameter, and may be different from the number of SRS resources indicated by the SRI field of the DCI and used for PUSCH transmission. As an example, when rank = 3 and a total number of SRS resources corresponding to the respective panels is 8 (for example, when the number of SRS resources of a first panel is 4 and the number of SRS resources of a second panel is 4), the SRI field may indicate three of the eight SRS resources.

In FIG. 7, the numbers of SRS resources of the respective panels (or the numbers of SRS resources configurable for the respective panels) are defined for each maximum rank. In FIG. 7, candidates (or entries) with a total number of SRS resources of the respective panels being the maximum rank or greater are defined. The combination of / association between the maximum rank and the numbers of SRS resources of the respective panels (which may be referred to as a table) shown in FIG. 7 may be defined in a specification or may be configured for the UE by higher layer signaling.

A plurality of candidates for the numbers of SRS resources of the respective panels may be defined for the same value of the maximum rank.

Switching between the number of SRS resources of the first panel and the number of SRS resources of the second panel may be performed.

FIG. 7 shows a case where the number of SRS resources corresponding to (or configurable for) the first panel and the number of SRS resources corresponding to the second panel being different from each other are supported, but is not limited to this. The number of SRS resources corresponding to the first panel and the number of SRS resources corresponding to the second panel may be the same. In this case, only a certain value (for example, {2, 4}) may be supported as the maximum rank.

### <Second Embodiment>

A second embodiment describes indication using an SRI combination in a case where simultaneous multi-panel transmission (for example, STxMP SDM scheme) based on a space division multiplexing scheme is supported. The second embodiment may be applied in combination with the first embodiment.

The second embodiment describes a case where one SRI combination is indicated/configured/applied. The SRI combination may indicate a certain SRS resource (or a certain number of SRS resources) from among SRS resources across a plurality of (for example, two) panels. The SRS resource may be a non-codebook SRS resource (for example, an NCB SRS resource).

A certain SRS resource (or SRS resource indicator) may be indicated for a UE by using an SRS resource indication field included in DCI, and an SRI indication table for a non-codebook PUSCH (for example, an NCB PUSCH). The SRI indication table (or SRI table) may be interpreted as an association between a value (or codepoint) of the SRS resource indication field and an SRI.

### {Option 2-1}

In Option 1-1 / Option 1-2 of the first embodiment, a certain SRI (or SRS resource) may be indicated for the UE by using an existing SRS resource indication field and an existing SRI indication table (for example, by using a codepoint / part of a table).

When simultaneous multi-panel transmission (for example, STxMP SDM scheme) based on a space division multiplexing scheme is indicated/configured, the SRI indication table may be applied by assuming that the number of SRS resources is a total number of SRS resources across the two panels.

Assume that the number of SRS resources of a first panel and the number of SRS resources of a second panel are N and M, respectively. In this case, in SRI(s) of the SRI indication table, SRIs 0, 1, .., N-1 may mean SRS resources of the first panel, and remaining SRIs (for example, SRIs N, N+1, .., N+M-1) may mean SRS resources of the second panel. Alternatively, in SRI(s) of the SRI indication table, SRIs 0, 2, ... may mean SRS resources of the first panel, and remaining SRIs (for example, SRIs 1, 3, ...) may mean second SRS resources.

At least one of N and M may be configured by an RRC parameter or may be defined in a specification. At least one of N and M may be determined by a floor function. For example, N may be determined by floor(number of SRS resources/2). Alternatively, N and M may be determined by ceiling(number of SRS resources/) and floor(number of SRS resources/2), respectively.

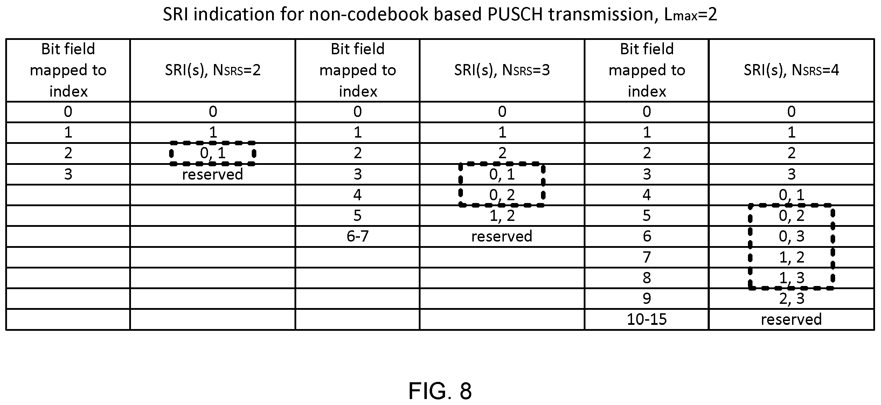

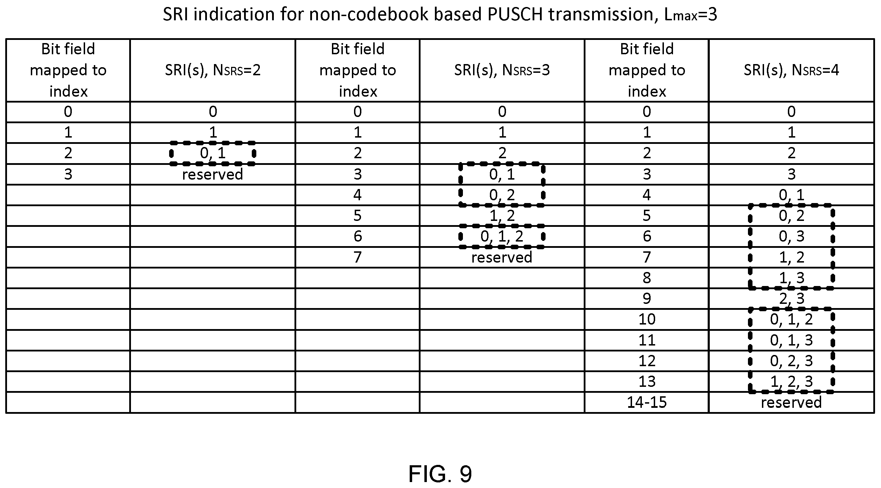

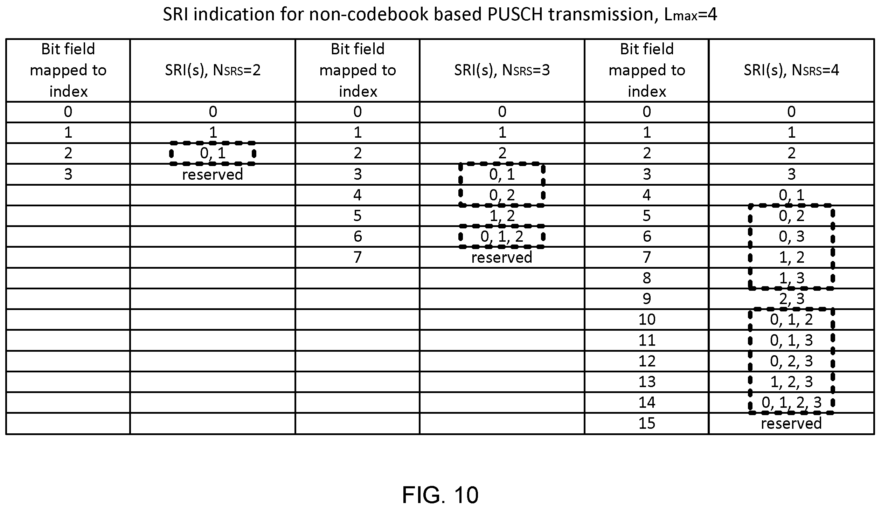

FIGS. 8 to 10 show examples of an association (table) between an index (SRI field index / SRI index) and one or more SRIs (SRS resource IDs) indicated by an SRI field for NCB-based PUSCH transmission. FIGS. 8, 9, and 10 correspond to L*ₘₐₓ* = 2, L*ₘₐₓ* = 3, and L*ₘₐₓ* = 4, respectively.

*N_{SRS}* is the number of SRS resources in an SRS resource set configured by a list of SRS resource sets (srs-ResourceSetToAddModList) and associated with non-codebook usage. When the STxMP SDM scheme is indicated/configured, N*_{SRS}* may be assumed to be a total number of SRS resources across the plurality of panels.

If the UE supports operation using a higher layer parameter "maxMIMO-Layers" indicating a maximum number of Multi Input Multi Output (MIMO) layers, and is configured with the higher layer parameter "maxMIMO-Layers," L*ₘₐₓ* is given by the parameter. Otherwise, L*ₘₐₓ* may be given by a maximum number of layers for PUSCH supported by the UE.

In FIGS. 8 to 10, when N*_{SRS} =* 2, SRI 0 and SRI 1 may correspond to the first panel and the second panel, respectively. When N*_{SRS} =* 3, SRI 0 and SRI 1/2 may correspond to the first panel and the second panel, respectively. When N*_{SRS} =* 4, SRI 0/1 and SRI 2/3 may correspond to the first panel and the second panel, respectively. Of course, the correspondence between the SRI and the first panel / second panel is not limited to this, and switching between the first panel and the second panel may be performed, or another correspondence may be applied.

When simultaneous multi-panel transmission (for example, STxMP SDM scheme) based on a space division multiplexing scheme is indicated/configured, only a part with a plurality of defined SRIs (or SRI combinations) may be applied. For example, in FIG. 8, index 2 (SRIs: 0, 1) of the SRI field may be applied when N*_{SRS} =* 2, indices 3 (SRIs: 0, 1) and 4 (SRIs: 0, 2) of the SRI field may be applied when N*_{SRS} =* 3, and indices 5 (SRIs: 0, 2), 6 (SRIs: 0, 3), 7 (SRIs: 1, 2), and 8 (SRIs: 1, 3) of the SRI field may be applied when N*_{SRS} =* 4.

Two or more SRIs (or SRI combinations) corresponding to respective codepoints may be indicated from among SRS resources configured in common for the two panels.

In this manner, in an SRI table of an existing system (for example, Rel. 17), a bit field (codepoint) with SRIs corresponding to the first panel and the second panel may be selectively applied.

For example, when the STxMP SDM scheme is indicated/configured, an SRI including only an SRS resource from a single panel (or an SRI combination indicating only an SRS resource corresponding to a single panel) may not be used. For example, the UE may expect/assume that when the STxMP SDM scheme is indicated/configured, an SRI with all the SRS resources corresponding to only the single panel (or one panel) (or a code point corresponding to the SRI) is not used. Alternatively, the UE may ignore the SRI (or the code point corresponding to the SRI).

Alternatively, in a case where dynamic switching between the single panel and the STxMP SDM scheme is supported, SRI indication may mean a scheduling scheme / selected panel. For example, the SRI indication may mean single-panel transmission when an SRI with only an SRS resource from the single panel (for example, all the SRS resources correspond to the single panel) is indicated. The UE may determine, based on the SRI indication, a transmission type (for example, single-panel transmission / multi-panel transmission (STxMP SDM scheme)).

When the STxMP SDM scheme is indicated/configured, an SRI corresponding to a certain rank may not be applied. The certain rank may be, for example, rank = 1 (or number of SRS resources = 1). The UE may expect/assume that when the STxMP SDM scheme is indicated/configured, the SRI corresponding to the certain rank is not applied (alternatively, the UE may ignore the SRI corresponding to the certain rank).

Alternatively, in a case where dynamic switching between the single panel and the STxMP SDM scheme is supported, SRI indication may mean a scheduling scheme / selected panel. For example, the SRI indication may mean single-panel transmission when an SRI with rank = 1 (for example, number of SRS resources = 1) is indicated. The UE may determine, based on the SRI indication, a transmission type (for example, single-panel transmission / multi-panel transmission (STxMP SDM scheme)).

Note that FIGS. 8 to 10 show a case where the SRI indication table of the existing system (for example, Rel. 17) is used, but are not limited to this. For respective codepoints of the SRI field, a new SRI indication field in which an SRI corresponding to the first panel and an SRI corresponding to the second panel are associated with each other may be applied.

In a case where the new SRI indication table is introduced, switching between the SRI indication table of the existing system and the new SRI indication table to be applied may be performed. The switching between the SRI indication table of the existing system and the new SRI indication table may be controlled based on an RRC parameter / DCI. For example, the switching between the tables may be controlled based on at least one of the presence or absence of configuration of a certain RRC parameter and an RNTI used for CRC scrambling of DCI.

### {Option 2-2}

In Option 1-3 of the first embodiment, a certain SRI (or SRS resource) may be indicated for the UE by using a new SRI indication table applied to PUSCH (for example, NCB PUSCH) transmission. Note that Option 2-2 may be applied to Option 1-1 / Option 1-2 of the first embodiment.

The new SRI indication table may be a table for supporting a case where a total number of SRS resources across the two panels is greater than 4.

Assume that the number of SRS resources of the first panel and the number of SRS resources of the second panel are N and M, respectively. In this case, in SRI(s) of the SRI indication table, SRIs 0, 1, .., N-1 may mean SRS resources of the first panel, and remaining SRIs (for example, SRIs N, N+1, .., N+M-1) may mean SRS resources of the second panel. Alternatively, in SRI(s) of the SRI indication table, SRIs 0, 2, ... may mean SRS resources of the first panel, and remaining SRIs (for example, SRIs 1, 3, ...) may mean second SRS resources.

When the STxMP SDM scheme is indicated/configured, an SRI including only an SRS resource from a single panel (or an SRI combination indicating only an SRS resource corresponding to a single panel) may not be used. For example, the UE may expect/assume that when the STxMP SDM scheme is indicated/configured, an SRI with all the SRS resources corresponding to only the single panel (or one panel) (or a code point corresponding to the SRI) is not used. Alternatively, the UE may ignore the SRI (or the code point corresponding to the SRI).

Alternatively, in a case where dynamic switching between the single panel and the STxMP SDM scheme is supported, SRI indication may mean a scheduling scheme / selected panel. For example, the SRI indication may mean single-panel transmission when an SRI with only an SRS resource from the single panel (for example, all the SRS resources correspond to the single panel) is indicated. The UE may determine, based on the SRI indication, a transmission type (for example, single-panel transmission / multi-panel transmission (STxMP SDM scheme)).

When the STxMP SDM scheme is indicated/configured, an SRI corresponding to a certain rank may not be applied. The certain rank may be, for example, rank = 1 (or number of SRS resources = 1). The UE may expect/assume that when the STxMP SDM scheme is indicated/configured, the SRI corresponding to the certain rank is not applied (alternatively, the UE may ignore the SRI corresponding to the certain rank).

Alternatively, in a case where dynamic switching between the single panel and the STxMP SDM scheme is supported, SRI indication may mean a scheduling scheme / selected panel. For example, the SRI indication may mean single-panel transmission when an SRI with rank = 1 (for example, number of SRS resources = 1) is indicated. The UE may determine, based on the SRI indication, a transmission type (for example, single-panel transmission / multi-panel transmission (STxMP SDM scheme)).

In a case where the new SRI indication table is introduced, switching between the SRI indication table of the existing system and the new SRI indication table to be applied may be performed. The switching between the SRI indication table of the existing system and the new SRI indication table may be controlled based on an RRC parameter / DCI. For example, the switching between the tables may be controlled based on at least one of the presence or absence of configuration of a certain RRC parameter and an RNTI used for CRC scrambling of DCI.

### <Third Embodiment>

A third embodiment describes the number of SRS resources configurable for respective panels in a case where simultaneous multi-panel transmission (for example, STxMP SDM scheme) based on a space division multiplexing scheme is supported.

The third embodiment describes a case where two SRI combinations (for example, one SRI combination) are indicated/configured/applied. The respective SRI combinations may indicate one or more SRIs / SRS resources of respective corresponding panels from among SRS resources of one panel (or SRS resource candidates corresponding to one panel). The SRS resource may be a non-codebook SRS resource (for example, an NCB SRS resource).

For example, SRIs / SRS resources corresponding to the respective panels may be indicated by one or two fields (for example, SRI fields) included in DCI. In this case, respective SRS resource candidates capable of being indicated by the respective SRI combinations may be separately configured for each panel. For example, a plurality of SRS resource candidates (or SRS resource sets) capable of being indicated by a first SRS combination (or a first field) and a plurality of SRS resource candidates capable of being indicated by a second SRS combination (or a second field) may be separately configured by an RRC parameter.

When the simultaneous multi-panel transmission based on the space division multiplexing scheme is indicated/configured/supported, a certain combination of / association between a maximum rank and the number of SRS resources of the two panels may be defined/configured. Based on the certain combination/association, SRS resources (or the number of SRS resources) to be configured for each panel may be determined for each maximum rank. The maximum rank (maxRank) may be a maximum number of ranks (or a maximum number of layers) capable of being supported in a case where the plurality of panels (or STxMP SDM scheme) are used.

The UE may expect/assume that SRS resources corresponding to the respective panels are each indicated based on a combination of / association between a maximum rank and the numbers of SRS resources corresponding to the two respective panels.

As the combination of / association between the maximum rank and the numbers of SRS resources corresponding to the two respective panels, at least one of Options 1-1 to Option 1-3 described in the first embodiment may be applied.

The third embodiment differs from the first embodiment in that SRIs / SRS resources corresponding to the respective panels are indicated by two SRI combinations (or two SRI fields each including an SRI combination). The configuration described in the first embodiment (at least one of Option 1-1 to Option 1-3) may be applied for the number of SRS resources of the respective panels corresponding to the maximum rank (or the number of SRS resources of the respective panels configurable for each maximum rank).

### <Fourth Embodiment>

A fourth embodiment describes indication of SRIs / SRS resources corresponding to respective panels in a case where simultaneous multi-panel transmission (for example, STxMP SDM scheme) based on a space division multiplexing scheme is supported. The fourth embodiment may be applied in combination with the third embodiment.

The fourth embodiment describes a case where two SRI combinations are indicated/configured/applied. The respective SRI combinations may indicate one or more SRIs / SRS resources of respective corresponding panels from among SRS resources of one panel (or SRS resource candidates corresponding to one panel). The respective SRI combinations may each include one or more SRIs / SRI resources.

For the two SRI combinations, one or a plurality of fields (for example, fields included in DCI) may be applied.

### {Option 4-1}

The DCI may be provided with a plurality of (for example, two) DCI fields for SRI indication for the respective panels. When the STxMP SDM scheme is indicated/configured, a first DCI field may indicate one or more SRIs corresponding to a first panel, and a second DCI field may indicate one or more SRIs corresponding to a second panel.

The indicated SRI (or SRS resource) may mean a rank. A UE may assume that the number of SRS resources corresponding to the indicated SRI corresponds to a rank (or may determine a rank, based on the number of SRS resources corresponding to the SRI).

### {Option 4-2}

A first DCI field may indicate one or more SRIs corresponding to a first panel, and a rank (or layer) of a second panel, and a second DCI field may indicate one or more SRIs corresponding to the second panel.

The second DCI field may indicate an SRI (or SRS resource) corresponding to the rank indicated by the first DCI field.

### {Option 4-3}

A first DCI field may indicate a rank of a first panel and a rank of a second panel, and a second DCI field may indicate one or more SRIs corresponding to the first panel, and one or more SRIs corresponding to the second panel.

The second DCI field may indicate an SRI corresponding to the rank indicated by the first DCI field.

### {Option 4-4}

A first DCI field may indicate a rank of a first panel and a rank of a second panel, a second DCI field may indicate one or more SRIs corresponding to the first panel, and a third DCI field may indicate one or more SRIs corresponding to the second panel.

The second DCI field / third DCI field may indicate SRIs corresponding to the respective ranks indicated by the first DCI field.

### {Option 4-5}

One DCI field may indicate one or more SRIs corresponding to a first panel and one or more SRIs corresponding to a second panel. In this case, the indicated SRI may mean a rank. In other words, the number of SRS resources corresponding to the indicated SRI may mean a rank.

### {Variation}

The DCI field may indicate the sum of respective ranks of the first and second panels, and a rank of the first panel and a rank of the second panel may be determined in accordance with the sum of the ranks, based on a certain rule. For example, when the sum of the ranks is an even number, the UE may assume that a rank corresponding to the first panel and a rank corresponding to the second panel are the same. When the sum of the ranks is an odd number, the UE may assume that one of the rank corresponding to the first panel and the rank corresponding to the second panel (for example, the rank of the first panel) is higher (for example, 1 rank higher) than the other.

The rank indication by the DCI field may be indication of a combination of respective ranks of the first and second panels. For example, at least one of Alt. 4-1 to Alt. 4-2 below may be applied.

### <<Alt. 4-1>>

When the STxMP SDM scheme is assumed (or only the STxMP SDM scheme is considered), a specific rank combination from among certain rank combination candidates may be indicated. The certain rank combination candidates may be, for example, {(1, 1), (1, 2), (2, 1), (2, 2), (3, 1), (1, 3)}. The UE may determine a rank corresponding to the first panel and a rank corresponding to the second panel, based on rank indication information.

### <<Alt. 4-2>>

When dynamic switching between single-panel transmission (for example, single panel TX) and STxMP SDM is supported, the combination indication (or indication by the DCI field) may be utilized to indicate a rank combination of the single-panel transmission or STxMP SDM. The combination indication may indicate a specific rank combination from among certain rank combination candidates.

When switching between single-panel transmission with the first panel (for example, single panel Tx with 1^{st} panel) and single-panel transmission with the second panel (for example, single panel Tx with 2^{nd} panel) is not supported, the certain rank combination candidates may be {(1, 1), (1, 2), (2, 1), (2, 2), (3, 1), (1, 3), (1, 0), (2, 0), (3, 0), (4, 0)}. (a, 0) may correspond to single-panel transmission.

When switching between the single-panel transmission with the first panel and the single-panel transmission with the second panel is supported, the certain rank combination candidates may be {(1, 1), (1, 2), (2, 1), (2, 2), (3, 1), (1, 3), (1, 0), (0, 1), (2, 0), (0, 2), (3, 0), (0. 3), (4, 0), (0, 4)}. (a, 0) and (0, b) may correspond to the single-panel transmission with the first panel and the single-panel transmission with the second panel, respectively.

In Alt. 4-1 / Alt. 4-2, (a, b) may mean that a rank of the first panel and a rank of the second panel are a and b, respectively.

(1, 3) and (3, 1) may not be supported, or may be supported depending on a UE capability.

In Alt. 4-1 / Alt. 4-2, which combination is (or how many combinations are) enabled for the DCI indication may be configured/indicated by RRC / MAC CE, or may be determined based on a UE capability.

In Alt. 4-2, which combination of (1, 0), (0, 1), (2, 0), (0, 2), (3, 0), (0. 3), (4, 0), or (0, 4) is supported may depend on a UE capability or may depend on RRC configuration related to a maximum rank of single-panel transmission.

Assume a case where the STxMP SDM scheme is indicated/configured and where a maximum rank of the STxMP SDM (or case where a plurality of panels are used) is X. In this case, at least one of Alt. 4A-1 to Alt. 4A-3 below may be applied to one or more SRIs corresponding to the first panel.

### <<Alt. 4A-1>>

The one or more SRIs corresponding to the first panel may be indicated from SRIs with rank={1, 2, ..., X}.

### <<Alt. 4A-2>>

The one or more SRIs corresponding to the first panel may be indicated from SRIs with rank={1, 2, ..., X-1}.

### <<Alt. 4A-3>>

The one or more SRIs corresponding to the first panel may be indicated from SRIs with rank={1, 2, ..., X/2}, rank={1, 2, ..., floor(X/2)}, or rank={1, 2, ..., ceiling(X/2)}.

Assume a case where the STxMP SDM scheme is indicated/configured, a maximum rank of the STxMP SDM (or case where a plurality of panels are used) is X, and a rank of the first panel is Y. In this case, at least one of Alt. 4B-1 to Alt. 4B-4 below may be applied to one or more SRIs corresponding to the second panel.

### <<Alt. 4B-1>>

The one or more SRIs corresponding to the second panel may be indicated from SRIs with rank={1, 2, ..., X}, irrespective of a rank of the first panel. On the other hand, the UE may not expect/assume that the sum of ranks indicated for the two panels is greater than X.

### <<Alt. 4B-2>>

The one or more SRIs corresponding to the second panel may be indicated from SRIs with rank={1, 2, ..., X-1}, irrespective of a rank of the first panel. On the other hand, the UE may not expect/assume that the sum of ranks indicated for the two panels is greater than X.

### <<Alt. 4B-3>>

The one or more SRIs corresponding to the second panel may be indicated from SRIs with rank={1, 2, ..., X/2}, rank={1, 2, ..., floor(X/2)}, or rank={1, 2, ..., ceiling(X/2)}, irrespective of a rank of the first panel.

### <<Alt. 4B-4>>

The one or more SRIs corresponding to the second panel may be indicated from SRIs with rank={1, 2, ..., X-Y}, based on a rank of the first panel.

When Alt. 4A-2 and Alt. 4B-4 are applied to the first panel and the second panel, respectively, a rank of each panel may be determined as follows.

### <<Case 4-1>>

Assume a case where maximum rank = 4, number of SRS resources (for example, configured NCB SRS resources) of first panel = 4, and number of SRS resources (for example, configured NCB SRS resources) of second panel = 4.

In this case, an SRI corresponding to the first panel is indicated from rank=1/2/3.

When rank=1 is indicated for the first panel, an SRI corresponding to the second panel is indicated from rank=1/2/3.

When rank=2 is indicated for the first panel, an SRI corresponding to the second panel is indicated from rank=1/2.

When rank=3 is indicated for the first panel, an SRI corresponding to the second panel is indicated from rank=1.

### <<Case 4-2>>

Assume a case where maximum rank = 4, number of SRS resources of first panel = 4, and number of SRS resources of second panel = 2.

In this case, an SRI corresponding to the first panel is indicated from rank=1/2/3.

When rank=1 is indicated for the first panel, an SRI corresponding to the second panel is indicated from rank=1/2.

When rank=2 is indicated for the first panel, an SRI corresponding to the second panel is indicated from rank=1/2.

When rank=3 is indicated for the first panel, an SRI corresponding to the second panel is indicated from rank=1.

### <<Case 4-3>>

Assume a case where maximum rank = 4, number of SRS resources of first panel = 2, and number of SRS resources of second panel = 4.

In this case, an SRI corresponding to the first panel is indicated from rank=1/2.

When rank=1 is indicated for the first panel, an SRI corresponding to the second panel is indicated from rank=1/2/3.

When rank=2 is indicated for the first panel, an SRI corresponding to the second panel is indicated from rank=1/2.

When rank=3 is indicated for the first panel, an SRI corresponding to the second panel is indicated from rank=1.

### <<Case 4-4>>

Assume a case where maximum rank = 4, number of SRS resources of first panel = 4, and number of SRS resources of second panel = 1.

In this case, an SRI corresponding to the first panel is indicated from rank=1/2/3.

An SRI corresponding to the second panel is indicated from rank=1.

### <<Case 4-5>>

Assume a case where maximum rank = 4, number of SRS resources of first panel = 1, and number of SRS resources of second panel = 4.

In this case, an SRI corresponding to the first panel is indicated from rank=1.

An SRI corresponding to the second panel is indicated from rank=1/2/3.

### <<Case 4-6>>

Assume a case where maximum rank = 4, number of SRS resources of first panel = 2, and number of SRS resources of second panel = 2.

In this case, an SRI corresponding to the first panel is indicated from rank=1/2.

When rank=1 is indicated for the first panel, an SRI corresponding to the second panel is indicated from rank=1/2.

When rank=2 is indicated for the first panel, an SRI corresponding to the second panel is indicated from rank=1/2.

### <<Case 4-7>>

Assume a case where maximum rank = 3, number of SRS resources of first panel = 4, and number of SRS resources of second panel = 4,
a case where maximum rank = 3, number of SRS resources of first panel = 4, and number of SRS resources of second panel = 2,
a case where maximum rank = 3, number of SRS resources of first panel = 2, and number of SRS resources of second panel = 4, or
a case where maximum rank = 3, number of SRS resources of first panel = 2, and number of SRS resources of second panel = 2.

In this case, an SRI corresponding to the first panel is indicated from rank=1/2.

When rank=1 is indicated for the first panel, an SRI corresponding to the second panel is indicated from rank=1/2.

When rank=2 is indicated for the first panel, an SRI corresponding to the second panel is indicated from rank=1.

### <<Case 4-8>>

Assume a case where maximum rank = 3, number of SRS resources of first panel = 4, and number of SRS resources of second panel = 1, or
a case where maximum rank = 3, number of SRS resources of first panel = 2, and number of SRS resources of second panel = 1.

In this case, an SRI corresponding to the first panel is indicated from rank=1/2.

An SRI corresponding to the second panel is indicated from rank=1.

### <<Case 4-9>>

Assume a case where maximum rank = 3, number of SRS resources of first panel = 1, and number of SRS resources of second panel = 4, or
a case where maximum rank = 3, number of SRS resources of first panel = 1, and number of SRS resources of second panel = 2.

In this case, an SRI corresponding to the first panel is indicated from rank=1.

An SRI corresponding to the second panel is indicated from rank=1/2.

### <<Case 4-10>>

Assume a case where maximum rank = 2.

In this case, an SRI corresponding to the first panel is indicated from rank=1.

An SRI corresponding to the second panel is indicated from rank=1.

Note that rank=3 (for example, rank=3 of one panel and rank=1 of the other in a case of maximum rank=4 with a plurality of panels) may not be supported for each panel.

### <Supplement>

At least one of the above-described embodiments may be applied only to the UE that has reported a specific UE capability or that supports the specific UE capability.

The specific UE capability may indicate at least one of the following:
- supporting an SDM scheme; and
- supporting a combination of a maximum rank and the number of NCB SRS resources.

The specific UE capabilities described above may be a capability applied across all the frequencies (commonly regardless of frequency), a capability per frequency (for example, one or combinations of a cell, a band, a band combination, a BWP, a component carrier, and the like), a capability per frequency range (for example, Frequency Range 1 (FR1), FR2, FR3, FR4, FR5, FR2-1, FR2-2), a capability per subcarrier spacing (SCS), or a capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when specific information associated with the above-described embodiment is configured for the UE by higher layer signaling.

When not supporting at least one of the specific UE capabilities or not configured with the specific information, the UE may apply operation of Rel. 15/16/17, for example.

### (Supplementary Note)

Regarding one embodiment of the present disclosure, the following supplementary notes of the invention will be given.

### {Supplementary Note 1-1}

A terminal including: a receiving section that receives configuration information related to a sounding reference signal (SRS) resource; and a control section that controls UL transmissions transmitted from a plurality of respective panels by using a space division multiplexing scheme, based on a combination of SRS resource indicators (SRIs) indicated by a field included in downlink control information, wherein an association between a maximum rank supported for the UL transmissions and numbers of SRS resources configurable for the respective panels is configured or defined.

### {Supplementary Note 1-2}

The terminal according to supplementary note 1-1, wherein a total number of SRS resources configurable for the plurality of respective panels is greater than or equal to a corresponding maximum rank.

### {Supplementary Note 1-3}

The terminal according to supplementary note 1-1 or 1-2, wherein when performing UL transmissions to be transmitted from a plurality of panels by using the space division multiplexing scheme, the control section determines SRS resources corresponding to the respective panels by assuming, in an association between an index and an SRS resource indicator corresponding to the field defined in an existing system, that a number of SRS resources is a total number of SRS resources across the plurality of panels.

### {Supplementary Note 1-4}

The terminal according to any one of supplementary notes 1-1 to 1-3, wherein when performing UL transmissions to be transmitted from a plurality of panels by using the space division multiplexing scheme, the control section assumes that an SRI indicating only an SRS resource corresponding to one panel or an SRI indicating rank 1 is not indicated.

### {Supplementary Note 2-1}

A terminal including: a receiving section that receives a plurality of configuration information related to a sounding reference signal (SRS) resource; and a control section that controls UL transmissions transmitted from a plurality of respective panels by using a space division multiplexing scheme, based on a combination of a plurality of SRS resource indicators (SRIs) indicated by one or more fields included in downlink control information, wherein an association between a maximum rank supported for the UL transmissions and numbers of SRS resources configurable for the respective panels is configured or defined.

### {Supplementary Note 2-2}

The terminal according to supplementary note 2-1, wherein a first field included in the downlink control information indicates an SRI corresponding to a first panel, and a rank of a second panel, and a second field included in the downlink control information indicates an SRI corresponding to the second panel.

### {Supplementary Note 2-3}

The terminal according to supplementary note 2-1 or 2-2, wherein a first field included in the downlink control information indicates a rank of a first panel and a rank of a second panel, and another field different from the first field indicates an SRI corresponding to the first panel and an SRI corresponding to the second panel.

### {Supplementary Note 2-4}

The terminal according to any one of supplementary notes 2-1 to 2-3, wherein respective SRS resource candidates capable of being indicated by the combination of the plurality of SRIs are separately configured.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

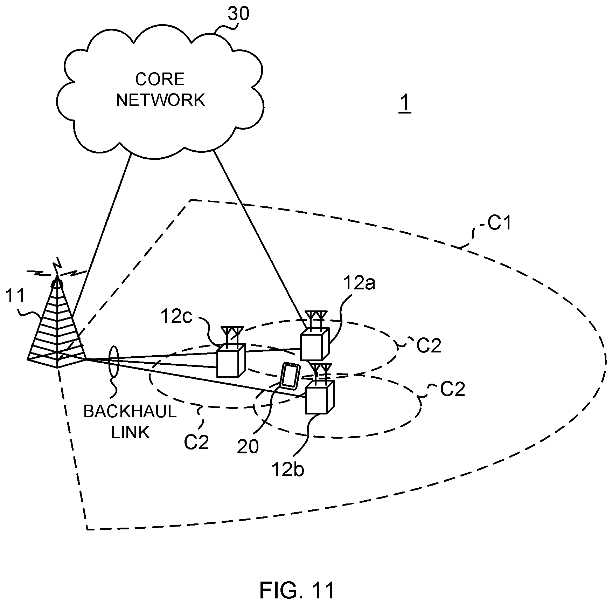

FIG. 11 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF) such as a User Plane Function (UPF), an Access and Mobility management Function (AMF), a Session Management Function (SMF), Unified Data Management (UDM), an ApplicationFunction (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

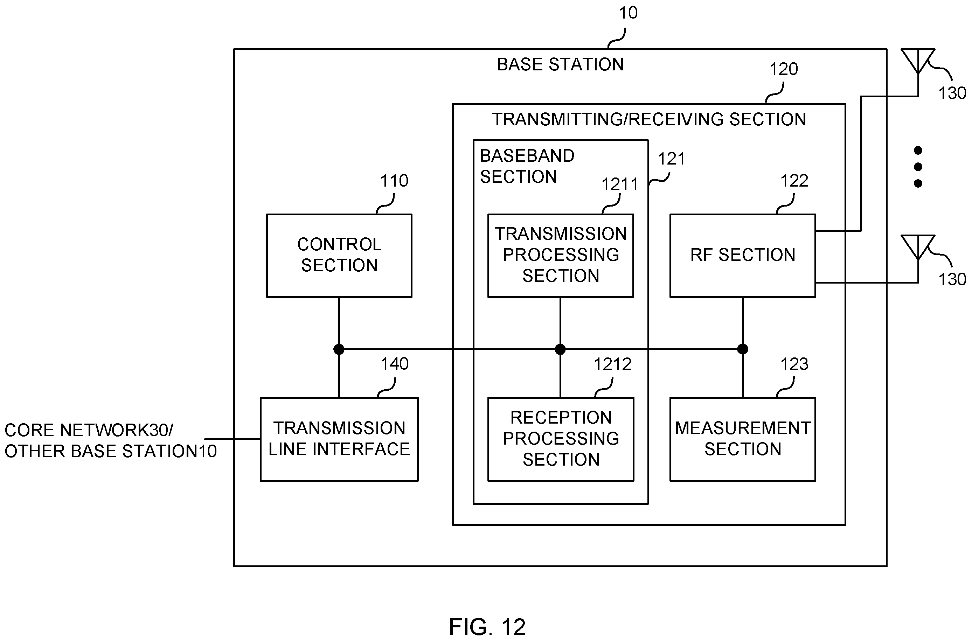

FIG. 12 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit configuration information related to a sounding reference signal (SRS) resource. The configuration information may be one or more SRS resource candidates (or one SRS resource set) configured for a plurality of panels. The control section 110 may control to indicate, by using a field included in downlink control information, a combination of SRS resource indicators (SRIs) to be applied to UL transmissions transmitted from a plurality of respective panels by using a space division multiplexing scheme.

The transmitting/receiving section 120 may transmit a plurality of configuration information related to a sounding reference signal (SRS) resource. The plurality of configuration information may be respective one or more SRS resource candidates (or a plurality of respective SRS resource sets) separately configured for a plurality of panels. The control section 110 may control to indicate, by using one or more fields included in downlink control information, a combination of a plurality of SRS resource indicators (SRIs) to be applied to UL transmissions transmitted from a plurality of respective panels by using a space division multiplexing scheme.

### (User Terminal)

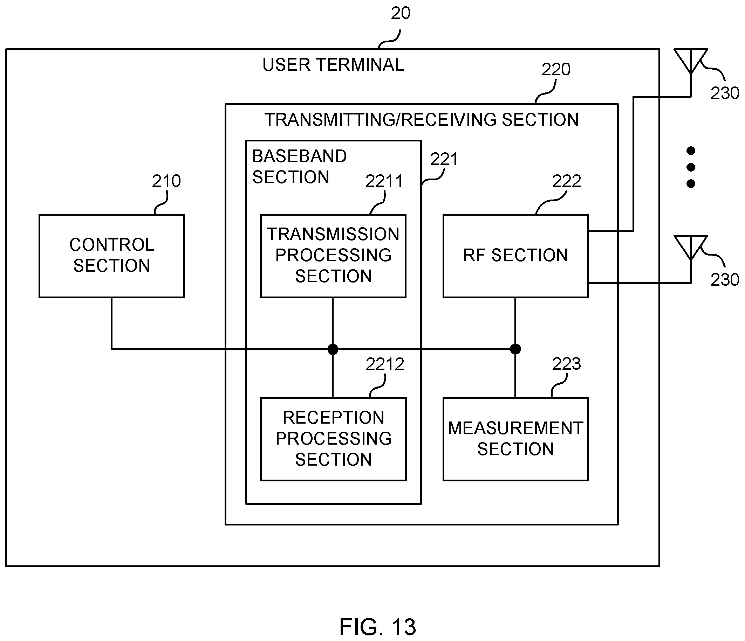

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive configuration information related to a sounding reference signal (SRS) resource. The configuration information may be one or more SRS resource candidates (or one SRS resource set) configured for a plurality of panels.

The control section 210 may control UL transmissions transmitted from a plurality of respective panels by using a space division multiplexing scheme, based on a combination of SRS resource indicators (SRIs) indicated by a field included in downlink control information. An association between a maximum rank supported for the UL transmissions and numbers of SRS resources configurable for the respective panels may be configured or defined. A total number of SRS resources configurable for the plurality of respective panels may be greater than or equal to a corresponding maximum rank.

When performing UL transmissions to be transmitted from a plurality of panels by using the space division multiplexing scheme, the control section 210 may determine SRS resources corresponding to the respective panels by assuming, in an association between an index and an SRS resource indicator corresponding to the field defined in an existing system (for example, Rel. 17), that a number of SRS resources is a total number of SRS resources across the plurality of panels. When performing UL transmissions to be transmitted from a plurality of panels by using the space division multiplexing scheme, the control section 210 may assume that an SRI indicating only an SRS resource corresponding to one panel or an SRI indicating rank 1 is not indicated.

The transmitting/receiving section 220 may receive a plurality of configuration information related to a sounding reference signal (SRS) resource. The plurality of configuration information may be respective one or more SRS resource candidates (or a plurality of respective SRS resource sets) separately configured for a plurality of panels.

The control section 210 may control UL transmissions transmitted from a plurality of respective panels by using a space division multiplexing scheme, based on a combination of a plurality of SRS resource indicators (SRIs) indicated by one or more fields included in downlink control information. An association between a maximum rank supported for the UL transmissions and numbers of SRS resources configurable for the respective panels may be configured or defined.

A first field included in the downlink control information may indicate an SRI corresponding to a first panel, and a rank of a second panel, and a second field included in the downlink control information may indicate an SRI corresponding to the second panel.

A first field included in the downlink control information may indicate a rank of a first panel and a rank of a second panel, and another field different from the first field may indicate an SRI corresponding to the first panel and an SRI corresponding to the second panel.

Respective SRS resource candidates capable of being indicated by the combination of the plurality of SRIs may be separately configured.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

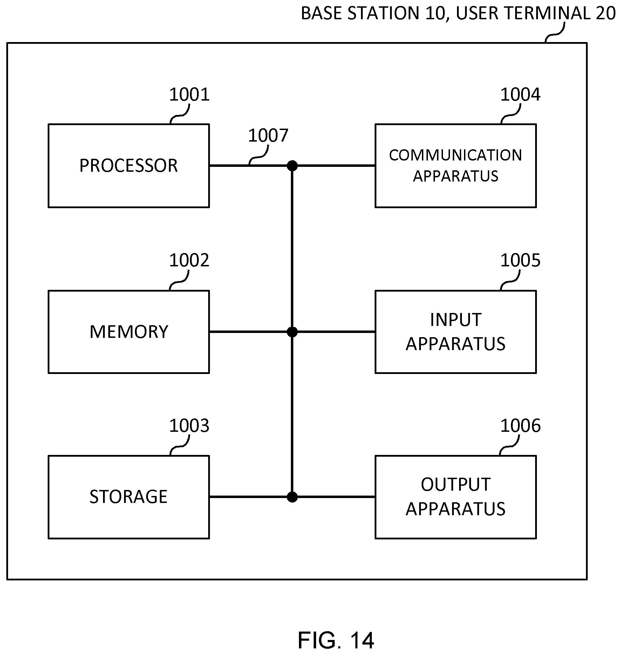

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

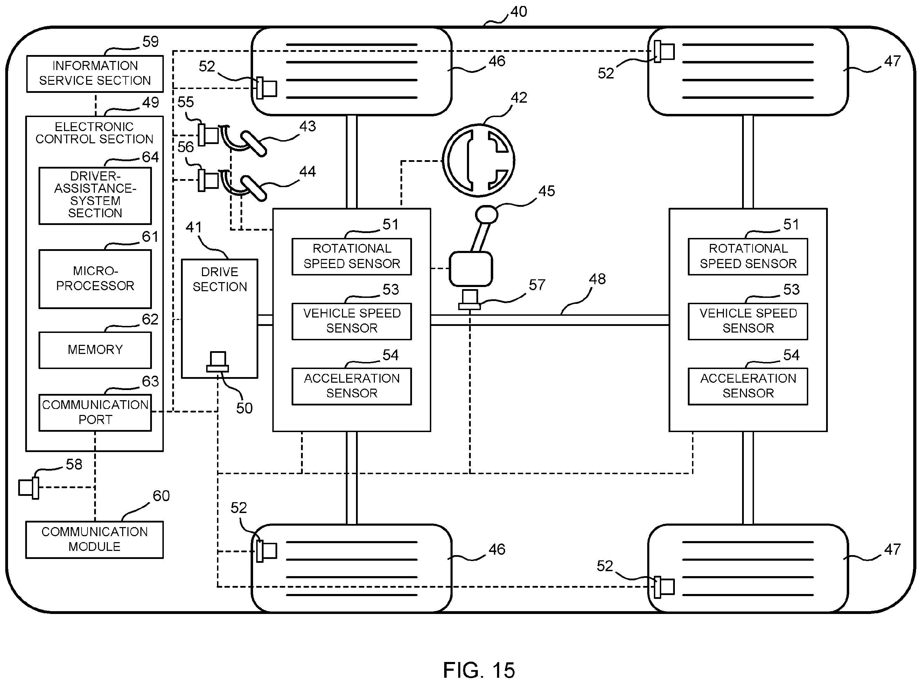

FIG. 15 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives configuration information related to a sounding reference signal (SRS) resource; and
a control section that controls UL transmissions transmitted from a plurality of respective panels by using a space division multiplexing scheme, based on a combination of SRS resource indicators (SRIs) indicated by a field included in downlink control information, wherein
an association between a maximum rank supported for the UL transmissions and numbers of SRS resources configurable for the respective panels is configured or defined.

2. The terminal according to claim 1, wherein
a total number of SRS resources configurable for the plurality of respective panels is greater than or equal to a corresponding maximum rank.

3. The terminal according to claim 1, wherein
when performing UL transmissions to be transmitted from a plurality of panels by using the space division multiplexing scheme, the control section determines SRS resources corresponding to the respective panels by assuming, in an association between an index and an SRS resource indicator corresponding to the field defined in an existing system, that a number of SRS resources is a total number of SRS resources across the plurality of panels.

4. The terminal according to claim 1, wherein
when performing UL transmissions to be transmitted from a plurality of panels by using the space division multiplexing scheme, the control section assumes that an SRI indicating only an SRS resource corresponding to one panel or an SRI indicating rank 1 is not indicated.

5. A radio communication method for a terminal, comprising:
receiving configuration information related to a sounding reference signal (SRS) resource; and
controlling UL transmissions transmitted from a plurality of respective panels by using a space division multiplexing scheme, based on a combination of SRS resource indicators (SRIs) indicated by a field included in downlink control information, wherein
an association between a maximum rank supported for the UL transmissions and numbers of SRS resources configurable for the respective panels is configured or defined.

6. A base station comprising:
a transmitting section that transmits configuration information related to a sounding reference signal (SRS) resource; and
a control section that controls to indicate, by using a field included in downlink control information, a combination of SRS resource indicators (SRIs) to be applied to UL transmissions transmitted from a plurality of respective panels by using a space division multiplexing scheme, wherein
an association between a maximum rank supported for the UL transmissions and numbers of SRS resources configurable for the respective panels is configured or defined.
